# EUROPÄISCHE PATENTANMELDUNG

(11) **EP 0 957 283 A2**
(43) Veröffentlichungstag der Anmeldung: **17.11.1999**
(21) Anmeldenummer: 99109517.5
(22) Anmeldetag: 12.05.1999
(51) Int. Cl.: F16F 9/53, F16C 11/04

(54) **Verfolgegelenkvorrichtung**

(30) Priorität: 12.05.1998 DE 19821287; 02.11.1998 EP 98120741
(71) Anmelder: Fa. SYSTEC EPE, 57400 Sindos-Thessaloniki (GR)
(72) Erfinder: Melidis, Paris, 55132 Kalamaria-Thessaloniki (GR); Lauboeck, Theodor, 85662 Hohenbrunn (DE)
(74) Vertreter: Rössig, Rolf

(57) **Zusammenfassung**

Die Erfindung betrifft eine Verfolgegelenkvorrichtung mit einer ersten Gelenkeinrichtung zur Lagerung eines ersten Gelenkteiles (1) in wenigstens schwenkbewegbarer Weise relativ zu einem Basisteil (3), einer zweiten Gelenkeinrichtung zur Lagerung eines zweiten Gelenkteiles (2) in wenigstens schwenkbewegbarer Weise relativ zu dem ersten Gelenkteil, und einer Verzögerungseinrichtung zum Verzögern einer Relativbewegung zwischen dem ersten Gelenkteil und dem Basisteil um eine erste Achse und/oder zum Verzögern einer Relativbewegung zwischen dem zweiten Gelenkteil und dem ersten Gelenkteil um eine zweite Achse. Erfindungsgemäß umfasst die die Verzögerungseinrchtung einen Fluidraum (12) in dem ein Fluid aufgenommen ist, dessen Fließverhalten nach Maßgabe einer Steuereinheit veränderbar ist, zur kontinuierlichen Änderung eines um die erste Achse und/oder um die zweite Achse wirksamen Bremsmomentes in einstellbarer Weise. Dadurch wird es auf vorteilhafte Weise möglich, das dynamische Führungsverhalten der Verfolgegelenkvorrichtung während der Bewegung des Zweiten Gelenkteiles relativ zu dem Basisteil entsprechend abzustimmen.

## Beschreibung

Die vorliegende Erfindung betrifft eine Verfolgegelenkvorrichtung mit einer ersten Gelenkeinrichtung zur Lagerung eines ersten Gelenkteiles in wenigstens schwenkbewegbarer Weise relativ zu einem Basisteil, einer zweiten Gelenkeinrichtung zur Lagerung eines zweiten Gelenkteiles in wenigstens schwenkbewegbarer Weise relativ zu dem ersten Gelenkteil, und einer Verzögerungseinrichtung zum Verzögern einer Relativbewegung zwischen dem ersten Gelenkteil und dem Basisteil um eine erste Achse und/oder zum Verzögern einer Relativbewegung zwischen dem zweiten Gelenkteil und dem ersten Gelenkteil um eine zweite Achse.

Derartige, auch als Tracking-Gelenk oder Fixierkopf bezeichnete Verfolgegelenkvorrichtungen finden Anwendung bei der Lagerung von Richt-, Ziel- oder Nivelliergeräten sowie insbesondere bei Aufzeichnungsgeräten wie beispielsweise Bildaufzeichnungsgeräten.

Bei bestimmten Anwendungsfällen derartiger Geräte ist es erforderlich, daß diese vergleichsweise rasch und präzise in bestimmte sich ggf. laufend ändernde Positionen gebracht werden. Die Bewegung derartiger Geräte in eine bestimmte Position und das ggf. ständige Nachführen bzw. das Neu-Orientieren soll insbesondere bei Bildaufzeichnungsgeräten harmonisch erfolgen. Eine hohe Eigenmasse dieser Geräte wirkt sich allgemein positiv auf eine harmonische Nachführbewegung aus. Die Eigenmasse dieser Geräte hat sich jedoch in den letzten Jahren aufgrund der zunehmenden Miniaturisierung von einzelnen Funktionsgruppen sowie durch die zunehmende Verwendung von Kunststoffmaterialien bei tragenden Strukturen insbesondere den Gehäuseteilen erheblich verringert.

Der Erfindung liegt die Aufgabe zugrunde, eine Verfolgegelenkvorrichtung zu schaffen, die sich gegenüber herkömmlichen Verfolgegelenkvorrichtungen wie sie beispielsweise bei Bildaufzeichnungsgeräten Anwendung finden durch ein verbessertes dynamisches Führungsverhalten auszeichnet.

Diese Aufgabe wird erfindungsgemäß durch eine Verfolgegelenkvorrichtung mit den in Patentanspruch 1 angegebenen Merkmalen gelöst.

Alternativ dazu oder auch in Kombination hiermit wird diese Aufgabe auch durch eine Verfolgegelenkeinrichtung gem. Patentanspruch gelöst.

Dadurch wird es auf vorteilhafte Weise möglich eine für die jeweils momentane Einsatzsituation günstigste Gelenkreaktionskraft erschütterungsfrei einzustellen und eine Schleppcharakteristik zu erhalten die eine weitgehend Überschwingungsfreie Positionierung und Nachführung auch bei vergleichsweise geringer Eigenmasse des zu positionierenden Gerätes ermöglicht. Insbesondere bei der Lagerung eines Bildaufzeichnungsgerätes wie beispielsweise einer Video-Kamera wird es auf besonders vorteilhafte Weise möglich der sich durch Auswahl und Einstellung des Objektives ergebenden jeweils unterschiedlichen Position des Geräte-Schwerpunktes sowie dem unterschiedlichen Eigengewicht (das bei leichten Gehäuseausführungen erheblich von der Bauart des Objektives beinflusst wird) Rechnung zu tragen. Die jeweilige Einstellung der Schleppwirkung der Verfolgegelenkvorrichtung lässt sich in vorteilhafter Weise durch an dem Gerät oder an einem Führungsgriff vorgesehene Mittel vorzugsweise stufenlos einstellen. Die jeweilige Einstellung der Schleppwirkung ist in vorteilhafter Weise während einer Verfolgebewegung und in weiterhin vorteilhafter Weise auch in Abhängigkeit von dem momentanen Bewegungsablauf (Position, Geschwindigkeit, Beschleunigung) in vorteilhafter Weise mittels einer Rechnereinrichtung einstellbar.

Die erste Achse und die zweite Achse des Verfolgegelenkes verlaufen in vorteilhafter Weise senkrecht zueinander und in einer Ebene. Alternativ dazu ist es auch möglich, bei weiterhin senkrechter Anordnung der Achsen zueinander die erste Achse und die zweite Achse voneinander beabstandet anzuordnen. Die erste Achse verläuft hierbei in Gebrauchsposition des Verfolgegelenkes in vorteilhafter Weise im wesentlichen senkrecht und vorzugsweise durch den Schwerpunkt eines von dem Verfolgegelenk getragenen Gerätes. Die zweite Achse verläuft bei dieser Anordnung im wesentlichen horizontal und von dem Schwerpunkt des Gerätes beabstandet. Dadurch wird auf vorteilhafte Weise ein Rückstellmoment um die zweite Achse erzeugt, das das Gerät in eine bestimmte Ausgangsposition drängt. Der Abstand der ersten Achse zu der zweiten Achse ist in vorteilhafter Weise veränderbar. Durch Einstellen der Relativposition der zweiten Achse zu dem Gerät kann in vorteilhafter Weise das jeweilige Rückstellmoment eingestellt werden. Das Rückstellmoment um die zweite Achse und in vorteilhafter Weise auch ein Rückstellmoment um die erste Achse kann bzw. können auch durch Federelemente, insbesondere Torsionselemente beeinflusst werden.

Gemäß einem besonderen Aspekt der vorliegenden Erfindung ist das Verzögerungsmoment um die erste Achse stufenlos einstellbar. Dadurch wird es möglich die Führungscharakteristik des Verfolgegelenkes dem Idealfall bzw. den jeweiligen Einsatzbedingungen anzupassen. Auch das Verzögerungsmoment um die zweite Achse ist in vorteilhafter Weise stufenlos einstellbar. In besonders vorteilhafter Weise ist das Verzögerungsmoment um wenigstens eine der Achsen während einer Schwenk- oder Drehbewegung stetig und kontinuierlich veränderbar. Dadurch wird es möglich, eine Verfolgebewegung beispielsweise das Nachführen einer Kamera mit einer vorbestimmten Beschleunigungs- und Abbremscharakteristik zu ermöglichen.

Zur Steuerung des Verzögerungsmomentes um wenigstens die erste oder die zweite Achse ist in vorteilhafter Weise eine Einstelleinrichtung vorgesehen die einen Leistungsschaltkreis aufweist, zur Steuerung des Verzögerungsmomentes um wenigstens die erste oder die zweite Achse. Dieser Leistungsschaltkreis ist wenigsten während des Betriebs des Verfolgegelenkes mit einer Spannungsquelle verbunden und betätigt bzw. steuert das Verzögerungsmoment um wenigstens eine der Achsen. Der Leistungsschaltkreis ist in besonders vorteilhafter Weise in einem der Gelenkteile oder insbesondere in dem Basisteil aufgenommen. Dadurch wird es möglich den Leistungsschaltkreis von der Umgebung des Verfolgegelenkes zuverlässig abzuschirmen.

Die Einstelleinrichtung und der Leistungsschaltkreis sind in vorteilhafter Weise in einen Regelkreis integriert. Die Einstelleinrichtung umfaßt dabei in vorteilhafter Weise eine Rechnereinrichtung zur Errechnung eines Soll-Verzögerungsmomentes zur Verzögerung der Drehbewegung um wenigstens die erste oder die zweite Achse. Die Rechnereinrichtung umfasst in vorteilhafter Weise eine Speichereinrichtung in der eine Anzahl vordefinierter Beschleunigungs- und Verzögerungscharakteristika abgespeichert sind. Dadurch wird es möglich, bestimmte Steuerstrategien auszuwählen, so daß ein Nachführen des durch das Verfolgegelenk getragenen Gerätes beispielsweise zunächst gegen ein relativ hohes Bremsmoment erfolgt, anschließend das Brems- bzw. Schleppmoment kontinuierlich verringert wird und dann zu einem bestimmten Zeitpunkt der beispielsweise durch einen Benutzer über einen Schaltknopf vorgegeben wird das Bremsmoment wieder kontinuierlich erhöht wird. Auch eine "ballistische" Nachführcharakteristik kann über die Rechnereinrichtung und die nach Maßgabe der Rechnereinrichtung gesteuerte Leistungssteuereinrichtung eingestellt werden. Der Zeitpunkt wann das durch das Verfolgegelenk geführte Gerät wieder stark verzögert wird hängt dabei von der Anfangsbeschleunigung des Gerätes ab. Dadurch wird es möglich auch mit hinsichtlich ihres Eigengewichtes extem leichten Kameras ein Nachführungsverhalten zu erreichen wie es bislang nur bei vergleichsweise schweren Kameras erreicht werden konnte. Die sich durch das geringe Eigengewicht dieser Kameras ergebenden Transportvorteile gehen damit nicht mehr zu Lasten einer günstigen Nachführcharakteristik.

Eine günstige Einstellung des momentanen Schlepp- bzw. Verzögerungsmomentes wird dadurch möglich, daß eine Positionserfassungseinrichtung vorgesehen ist zur Erfassung einer momentanen Schwenkposition wenigstens des ersten Gelenkteiles relativ zu dem Basisteil oder des zweiten Gelenkteiles relativ zu dem ersten Gelenkteil. Dadurch wird es auf vorteilhafte Weise möglich, den Einfluss der Schwerpunktsverlagerung des durch das Verfolgegelenk geführten Gerätes zu kompensieren bzw. zu korrigieren. Hierzu ist in vorteilhafter Weise die Rechnereinrichtung mit der Positionserfassungseinrichtung verbunden. Die Rechnereinrichtung umfast in vorteilhafter Weise eine Rechenschaltung zur Bestimmung eines Soll-Verzögerungsmomentes in Abhängigkeit von der momentanen Relativposition der Gelenkteile zueinander und/oder der Momentan-Geschwindigkeit der Gelenkteile zueinander und/oder der Momentan-Beschleunigung der Gelenkteile zueinander. Da sich die Konfiguration des jeweils durch das Verfolgegelenk geführten Gerätes primär auf die Schwenkcharakteristik um die zweite (üblicherweise die horizontale) Achse auswirkt ist es ggf. ausreichend, lediglich bezüglich der Steuerung der Schwenk- oder Drehbewegung um die zweite Achse die genannten Maßnahmen zu treffen.

Ein zur Steuerung der Schlepp- bzw. Verzögerungsmomentencharakteristik vorgesehener Datensatz kann im Rahmen eines Selbst-Lernmodus erzeugt werden. Das durch das Verfolgegelenk geführte Gerät wird hierbei in eine Startposition geschwenkt und mit einer bestimmten Rückstellkraft oder infolge seines Eigengewichtes in eine Endstellung bewegt. Die Rechnereinrichtung erfasst dabei die sukzessive gemessenen Momentanpositionswerte sowie die momentanen Beschleunigungen und die über den Leistungsschaltkreis eingestellten Verzögerungsmomente. Anhand dieser Daten errechnet die Rechnereinrichtung die Position des Geräteschwerpunktes und das Geräteträgheitsmoment. Diese Daten können bedarfsweise bei der Einstellung der momentanen Verzögerungsmomente beispielsweise zur Eigengewichtskompensation des Gerätes berücksichtigt werden. Es ist auch möglich, entsprechende Korrekturkennwerte über eine Eingabeeinrichtung der Rechnereinrichtung zuzuführen.

Eine insbesondere in Verbindung mit einem Bildaufzeichnungsgerät beispielsweise einer Videokamera besonders vorteilhafte Ausführungsform der Erfindung ist dadurch gegeben, daß die Rechnereinrichtung mit einer Brennweitenerfassungseinrichtung verbindbar ist, zur Einstellung eines Soll-Verzögerungsmomentes in Abhängigkeit von der momentanen Brennweite. Bei der Erfassung von relativ weit entfernten Objekten werden in vorteilhafter Weise vergleichsweise hohe Bremsmomente an beide Gelenkachsen angelegt, wogegen bei der Erfassung naher und insbesondere bewegter Objekte niedrigere Bremsmomente eingestellt werden. Die Änderung der effektiven Bremsmomente kann beispielsweise im wesentlichen proportional zur Entfernung des zu erfassenden bzw. zu verfolgenden Objektes eingestellt werden.

Zur Vorgabe gewünschter Verzögerungscharakteristika ist in vorteilhafter Weise eine Eingabeeinrichtung vorgesehen, zur Auswahl oder zur Eingabe eines bestimmten Verzögerungsmodus. Diese Eingabeeinrichtung umfasst in vorteilhafter Weise ein Potentiometer. Die Eingabeeinrichtung oder das Potentiometer sind vorzugsweise in oder an dem Basisteil, oder einem der beiden Gelenkteile benachbart angeordnet. Bei der Verwendung eines Führungsgriffes zur Nachführung des Gerätes ist die Eingabeeinrichtung mit Vorteil im Bereich eines Führungsgriffes angeordnet wodurch es möglich wird, die gewünschte Bremscharakteristik unmittelbar über den Nachführgriff einzustellen. In vorteilhafter Weise ist hierbei ein an dem Nachführgriff vorgesehener Griffabschnitt drehbar.

Die Fluidbremseinrichtung weist gemäß einem besonderen Aspekt der vorliegenden Erfindung einen Fluidraum auf in dem ein rheologisches Fluid aufgenommen ist. Als rheologisches Fluid wird in vorteilhafter Weise ein ein elektro-rheologisches Fluid beispielsweise ein elektro-rheologisches Silikonöl verwendet. Durch ein derartiges Fluid wird es möglich eine extrem sanfte Änderung der Reaktionskräfte des Verfolgegelenkes zu erreichen so daß beispielsweise bei einer Bildaufzeichnung auch während der Änderung der Schleppkräfte kein "Verwackeln" des Bildes auftritt. Insbesondere im Falle, daß das Verfolgegelenk auf einem Stativ angeordnet ist das konstruktions- oder aufstellungsbedingt eine vergleichsweise geringe Eigensteifigkeit aufweist wird auf vorteilhafte Weise vermieden daß infolge einer diskontinuierlichen Änderung der Schleppmomente insbesondere um die erste Achse das Stativ sich elastisch verformt und beim Ausfedern die Kamera kurzfristig in Schwingung versetzt. Da durch das erfindungsgemäße Verfolgegelenk eine besonders gleichmäßige Nachführcharakteristik auch bei vergleichsweise leichten Geräten insbesondere Video-Kameras gewährleistet ist, wird durch das erfindungsgemäße Verfolgegelenk auch das Problem einer ungenügenden Stativsteifigkeit gelöst das allgemein mit dem Gewicht des Gerätes bzw. der Kamera wächst.

Alternativ zu einem elektro-rheologischen Fluid oder auch in Kombination mit diesem ist es möglich ein magneto-rheologisches Fluid zu verwenden. Die zur Erzeugung des Magnetfeldes vorgesehen Elemente, insbes. Spulen sind mit Vorteil in dem Basisteil und dem ersten oder zweiten Gelenkteil angeordnet. Die Gehäuseisolierung kann bei der Steuerung des Schleppmomentes über ein Magnetfeld vergleichsweise dünn ausgebildet sein. Sowohl die Spulen als auch ein zur Spannungsversorgung vorgesehener Leistungschaltkreis sind durch eine Gehäuseeinrichtung aus einem elektrisch leitfähigen Material nach Außen hin abgeschirmt.

Ebenfalls alternativ zu dem elektro-rheologischen Fluid oder auch in Kombination mit diesem ist es möglich ein elektrostriktives Fluid zur Änderung des Führungsverhaltens des Verfolgegelenkes in einstellbarer Weise zu verwenden.

Eine im Hinblick auf eine besonders steife und im wesentlichen hysteresefreie Aufbringung der Schleppmomente vorteilhafte Ausführungsform der Erfindung ist dadurch gegeben, daß in der Fluidbremseinrichtung ein Scherspaltraum gebildet ist zur Übertragung einer Fluid-Scherkraft. Bei dieser Ausführungsform der Fluidbremseinrichtung ergibt sich auf vorteilhafte Weise ein besonders sanftes Bewegen des Gerätes aus dem Stillstand. Auch etwaige, ggf. in den Fluidraum gelangte Gaseinschlüsse wirken sich kaum nachteilig auf das Verzögerungsverhalten des Verfolgegelenkes aus. Auch bei kleinsten Schwenkamplituden kann ein gewünschtes Dämpfungsmoment aufrechterhalten werden.

Die Fluid-Scherkraft ist in vorteilhafter Weise nach Maßgabe der Einstelleinrichtung elektrisch einstellbar. Hierzu wird bei der Verwendung eines elektro-rheologischen Fluides eine Spannung an zwei, einen Scherspaltraum begrenzende Elektroden angelegt. Die angelegte Spannung ist über den Leistungsschaltkreis und die mit diesem gekoppelte Einstelleinrichtung steuerbar.

Das Spaltmaß zwischen paarweise einander zugeordenten Elektroden liegt vorzugsweise im Bereich von 0.4 bis 3 mm. Kleinere Spaltmaße erlauben die Erzeugung ausreichender Verzögerungsmomente bei niedrigeren Spannungen, bereiten jedoch unter fertigungstechnischen Gesichtspunkten Probleme. Die wirksame Elektrodenfläche liegt je nach erforderlichem Bremsmoment im Bereich von 5 bis 35 ggf. bis 300 cm² . Die an die Elektroden angelegte Spannung liegt im Bereich von 0 bis 10 kV. Aufgrund des hohen Widerstandes des elektro-rheologischen Fluides ist der dabei fließende Stom nur gering. Die Spannungsquelle zur Versorgung des Leistungsschaltkreises ist mit Vorteil in das Basisteil integriert. Als Spannungsquelle dient vorzugsweise eine 9V-Batterie die von unten in das Basisteil eingesetzt ist.

Alternativ zu der Erzeugung des Schleppmomentes des Verfolgegelenkes über ein Fluid-Scherfeld oder auch in Kombination damit ist es in vorteilhafter Weise möglich, daß die Fluidbremseinrichtung eine Drosseldurchgangseinrichtung aufweist und daß die Drosselwirkung der Drosseldurchgangseinrichtung nach Maßgabe der Einstelleinrichtung einstellbar ist. Diese Ausgestaltung eignet sich insbesondere zur Erzeugung vergleichsweise großer Bremsmomente. Die Einstellung des gewünschten Schleppmomentes erfolgt dabei in vorteilhafter Weise dadurch, daß in dem Scherspaltraum und/oder in der Drosseldurchgangseinrichtung ein Flächen-Elektrodenpaar vorgesehen ist und daß das Flächen-Elektodenpaar mit dem Leistungsschaltkreis verbunden ist. Auch bei dieser Ausführungsform liegt die an die Elektroden angelegte Spannung vorzugsweise im Bereich von 0 bis 10 kV. Der Abstand der Elektroden liegt vorzugsweise im Bereich von 0.25 bis 3 mm.

Die Verzögerungseinrichtung umfasst gemäß einer bevorzugten Ausführungsform des Verfolgegelenkes eine Anzahl Bremslamellen, vorzugsweise wenigstens fünf. Diese Bremslamellen sind vorzugsweise aus einem korrosionsbeständigen Material gebildet. Die gesamte wirksame Fläche der Bremslamellen sowie der Durchmesser der Bremslamellen ist unter Berücksichtigung der Eigenschaften des jeweils verwendeten Fluides im Hinblick auf des maximal erforderliche Bremsmoment abgestimmt. Bei baugleichen Ausführungsformen des Verfolgegelenks ist es auch möglich, insbesondere herstellerseitig über das verwendete rheologische Fluid das maximale Bremsmoment festzulegen.

Gemäß einem besonderen Aspekt der vorliegenden Erfindung ist eine Verzögerungsmomenterfassungseinrichtung vorgesehen, zur Erfassung des Verzögerungsmomentes. Über eine derartige Erfassungseinrichtung ist es möglich, insbesondere temperaturschwankungsbedingte Viskositätsänderungen des rheologischen Fluides zu kompensieren. Vorzugsweise ist hierzu auch eine Temperaturerfassungseinrichtung vorgesehen, zur Erfassung der Temperatur des Fluides in der Fluidbremseinrichtung.

Eine optimale Einstellung der gewünschten Schleppmomente kann dadurch erreicht werden, daß die Verzögerungsmomenterfassungseinrichtung mit der Rechnereinrichtung gekoppelt ist, und daß in der Rechnereinrichtung eine Vergleichseinrichtung vorgesehen ist zur Durchführung eines Soll/Ist Vergleiches wobei eine Abweichung zwischen einem Sollwert und einem Ist-Wert des jeweiligen Verzögerungsmomentes über den Leistungsschaltkreis kompensiert wird.

Eine im Hinblick auf eine besonders günstige Abdichtung der Fluidbremseinrichtung vorteilhafte Ausführungsform der Erfindung ist dadurch gegeben, daß die Verzögerungseinrichtung zur Erzeugung eines Schlepp-Momentes um die erste Achse und die Verzögerungseinrichtung zur Erzeugung eines Schlepp-Momentes um die zweite Achse in einer gemeinsamen Behältereinrichtung aufgenommen sind. Dadurch wird es möglich den gesamten Fluidraum über eine einzige Dichteinrichtung gegenüber der Umgebung abzudichten. Die entsprechend abgedichtete Dichtstelle ist mit Vorteil derart angeordnet, daß diese im oberen Bereich des Fluidraumes liegt, so daß in einer üblichen Aufstellungsposition des Verfolgegelenkes das in dem Fluidraum aufgenommene Fluid nicht entweichen kann.

Die Verzögerungseinrichtung umfaßt in vorteilhafter Weise wenigstens eine vorzugsweise profillierte Walze die zumindest umfangsseitig mit einer leitfähigen Oberfläche versehen ist. Diese Walze ist vorzugsweise in einem Umfangsspaltraum aufgenommen der eine Elektrodeneeinrichtung umfaßt so daß in dem Umfangsspaltraum ein elektrisches Feld einstellbar ist. Die Elektrodeneinrichtung kann vorzugsweise aus einem dünnen Blechmaterial gefertigt sein, das beispielsweise als Insert-Moldingteil in eine Kunststoffstruktur eingeformt ist. Die Verzögerungseinrichtung kann auch eine Anzahl relativ dünner Blechlamellen die ggf. als Stanzteile ausgebildet sind, umfassen die unter einem bestimmten Abstand von beispielsweise 2,25 mm abfolgend auf einem Wellenzapfen angeordnet sind und in den so gebildeten Zwischenräumen ebenfalls lamellenartig ausgebildete stationäre Blechscheiben aufnehmen.

In vorteilhafter Weise sind zwischen den Elektroden Abstandshalter vorgesehen die die Einhaltung vorbestimmter mindestabstände von beispielsweise 0,25 mm sicherstellen. Diese Abstandshalter können ggf. Teile von Drehlagereinrichtungen bilden. In vorteilhafter Weise sind die Abstandshalter in Form kleiner Kunststoffplättchen vorgesehen die in bestimmten Abständen auf wenigstens einer von zueinander benachbarten Flächen-Elektroden zueinander angeordnet sind.

Insbesondere bei einer derart integrierten Ausführungsform der Verzögerungseinrichtung wird das Schlepp-Moment um eine der Achsen durch ein Torsionsscherfeld erzeugt, und das Schlepp-Moment um die andere Achse durch eine Drosseleinrichtung und/oder ein Linear-Scherfeld erzeugt.

Vorzugsweise verlaufen die erste Achse und die zweite Achse zueinander senkrecht. Die Achsen verlaufen vorzugsweise ferner in einer Ebene. Zur Erzeugung eines Rückstellmomentes verlaufen die Achsen vorzugsweise voneinander beabstandet. Der Abstand der ersten Achse zu der zweiten Achse ist vorzugsweise veränderbar.

Das Verzögerungsmoment um die erste Achse ist vorzugsweise stufenlos einstellbar. Auch das Verzögerungsmoment um die zweite Achse ist vorzugsweise stufenlos einstellbar.

Die an die Elektroden angelegte Spannung ist vorzugsweise eine pulsierende Spannung oder eine Wechselspannung.

Die Einstelleinrichtung umfaßt eine Rechnereinrichtung zur Errechnung eines Soll-Verzögerungsmomentes zur Verzögerung der Drehbewegung um wenigstens die erste oder die zweite Achse.

Vorzugsweise ist eine Positionserfassungseinrichtung vorgesehen, zur Erfassung einer momentanen Schwenkposition wenigstens des ersten Gelenkteiles relativ zu dem Basisteil oder des zweiten Gelenkteiles relativ zu dem ersten Gelenkteil.

Die Rechnereinrichtung ist vorzugsweise mit der Positionserfassungseinrichtung verbunden und umfaßt eine Rechenschaltung zur Bestimmung eines Soll-Verzögerungsmomentes in Abhängigkeit von der momentanen Relativposition der Gelenkteile zueinander und/oder der Momentan-Geschwindigkeit der Gelenkteile zueinander und/oder der Momentan-Beschleunigung der Gelenkteile zueinander.

Die Rechnereinrichtung ist in vorteilhafter Weise mit einer Entfernungs oder Brennweitenerfassungseinrichtung verbindbar, zur Einstellung eines Soll-Verzögerungsmomentes in Abhängigkeit von der momentanen Enfernung bzw. Brennweite.

Die Einstelleinrichtung umfaßt in vorteilhafter Weise eine Eingabeeinrichtung, zur Auswahl oder zur Eingabe eines bestimmten Verzögerungsmodus.

Die Eingabeeinrichtung umfaßt vorzugsweise ein Potentiometer das ggf. unmittelbar durch einen Drehgriff betätigbar ist. Das Potentiomenter kann ggf. durch eine Schaltungsanordnung ersetzt sein die eine im wesentlichen stufenlose oder zumindest sehr feine Auswahl oder Einstellung des Dämpfungsverhältens zulässt.

Die Eingabeeinrichtung ist vorzugsweise dem Basisteil oder einem der beiden Gelenkteile benachbart angeordnet.

Die Eingabeeinrichtung ist vorzugsweise im Bereich eines Führungsgriffes angeordnet.

Die an die Flächenelektroden angelegte Spannung ist vorzugsweise eine bipolare Spannung.

Die Potentialwechselfrequenz liegt vorzugsweise im Bereich von 1 bis 50Hz im Bereich von 4 bis 12Hz.

Die Potentialänderung erfolgt vorzugsweise innerhalb einer Potentialänderungs-Übergangszeit t_{T} die im Bereich von 0.02 bis 0.25s liegt.

Der Fluidraum gemäß einer besonders bevorzugten Ausführungsform der Erfindung zumindest im Bereich der Elektroden weitestgehend gaseinschlussfrei befüllt.

Vorzugsweise ist eine Druckausgleichseinrichtung insbesondere Überdruckventil mit angeschlossenen Ausgleichskammer vorgesehen, zur Begrenzung des Druckes in dem System.

Der Hochspannungsschaltkreis ist vorzugsweise in unmittelbarer Nähe der Vorrichtung angeordnet, insbesondere in eines der Gelenkteile oder in das Basisteil integriert ist.

Die Fluidbremseinrichtung weist vorzugsweise eine Drosseldurchgangseinrichtung auf und die Drosselwirkung der Drosseldurchgangseinrichtung ist vorzugsweise nach Maßgabe der Einstelleinrichtung einstellbar.

In dem Scherspaltraum und/oder in der Drosseldurchgangseinrichtung ist vorzugsweise ein Elektrodenpaar vorgesehen das Elektodenpaar mit dem Hochspannungsschaltkreis verbunden ist.

Der Leistungsschaltkreis legt an das Elektrodenpaar eine Spannung im Bereich von vorzugsweise 0 bis 10 kV an.

Der Abstand der Elektoden liegt vorzugsweise im Bereich von 0.5 bis 3 mm.

Die Verzögerungseinrichtung umfaßt vorzugsweise eine Anzahl Bremslamellen.

Vorzugsweise ist eine Verzögerungsmomenterfassungseinrichtung vorgesehen, zur Erfassung des Verzögerungsmomentes.

Vorzugsweise ist eine Temperaturerfassungseinrichtung vorgesehen, zur Erfassung der Temperatur des Fluides in der Fluidbremseinrichtung.

Die Verzögerungsmomenterfassungseinrichtung ist mit der Rechnereinrichtung gekoppelt, und in der Rechnereinrichtung ist vorzugsweise eine Vergleichseinrichtung vorgesehen zur Durchführung eines Soll/Ist Vergleiches wobei eine Abweichung zwischen einem Sollwert und einem Ist-Wert des jeweiligen Verzögerungsmomentes über den Hochspannungsschaltkreis kompensiert ist.

Die Verzögerungseinrichtung zur Erzeugung eines Schlepp-Momentes um die erste Achse und die Verzögerungseinrichtung zur Erzeugung eines Schlepp-Momentes um die zweite Achse sind vorzugsweise in einer gemeinsamen Behältereinrichtung aufgenommen.

Das Schlepp-Moment um eine der Achsen wird vorzugsweise durch ein Torsionsscherfeld erzeugt, und das Schlepp-Moment um die andere Achse durch eine Drosseleinrichtung und/oder ein Linear-Scherfeld erzeugt.

Das zweite Gelenkteil ist vorzugsweise mit einer Befestigungseinrichtung versehen, zur Befestigung einer Kamera.

Eine Fixiereinrichtung ist vorzugsweise vorgesehen, zur Fixierung wenigstens der Relativposition des zweiten Gelenkteiles relativ zu dem ersten Gelenkteil.

Die Fixiereinrichtung weist vorzugsweise eine Klemmschraubeneinrichtung und/oder eine Ventileinrichtung insbesondere eine elektromagnetisch betätigbare Ventilschiebereinrichtung auf.

Das Basisteil ist mit einer Stativ- oder Träger-Befestigungseinrichtung versehen, zur Befestigung des Basisteiles an einem Stativ oder an einer Trägereinrichtung.

Der Hochspannungsschaltkreis ist vorzugsweise in das Basisteil oder das erste Gelenkteil, oder das zweite Gelenkteil integriert.

Im Inneren des ersten Gelenkteiles ist vorzugsweise eine Schleifkontakteinrichtung vorgesehen, zur Spannungsversorgung einer zur Steuerung eines Schleppmomentes um die zweite Achse (Y) vorgesehenen Elektrodeneinrichtung.

Weitere vorteilhafte Ausgestaltungen sind in den Unteransprüchen dargelegt.

Weitere Einzelheiten der Erfindung ergeben sich aus der nachfolgenden Beschreibung mehrerer bevorzugter Ausführungsformen in Verbindung mit der Zeichnung. Es zeigen:
- Fig.1: eine vereinfachte perspektivische Schnittdarstellung eines Verfolgegelenkes mit kommunizierenden Fluidräumen,
- Fig.2: eine Schema-Darstellung der bei einem Verfolge-Gelenk gemäß einer alternativen Ausführungsform der Verzögerungseinrichtung vorgesehenen Schaltung;
- Fig.3: eine Skizze zur Erläuterung der Schleppmomentenregelung unter Berücksichtigung der momentanen Brennweite;
- Fig.4a: eine Längs-Schnittansicht durch ein oberes Gelenkteil einer Verfolgegelenkeinrichtung gemäß einer dritten bevorzugten Ausführungsform mit Ringkolben-Kompressionskammer und in einer Drosselkanaleinrichtung angeordneter Drossel-Flächenelektrode sowie mit manuell einstellbarem Fixier- bzw. Vorwahlventil;
- Fig. 4b: eine Längsschnittansicht einer vierten bevorzugten Ausführungsform ebenfalls mit Ringkolben-Kompressionskammer sowie einer Drossel-Flächenelektrode mit einstellbarem Abstand zwischen den den Drosselkanal begrenzenden Flächenelektroden;
- Fig. 5: eine Axial-Schnittansicht durch ein Gelenkteil einer Verfolgegelenkeinrichtung gemäß einer fünften Ausführungsform der Erfindung insbesondere zur Dämpfung der Schwenkbewegung um eine im wesentlichen vertikale Achse mit einem als Flächen-Elektrode wirksamen Walzenelement mit vergrößerter Scherfläche;
- Fig.6a, 6b, 6c: jeweils vereinfachte Diagramme zur Erläuterung des zeitlichen Verlaufes der an die Flächen-Elektroden vorzugsweise angelegten Spannung in Abhängigkeit von der gewünschten Verfolgegelenk-Dämpfung ( als bevorzugte Alternative zu einer gesteuerten Gleichspannung) insbesondere zur Mischung einer elektrorheologischen Flüssigkeit bestehend aus Silikonöl und darin enthaltenen Polyurethan-Partikeln;
- Fig.7: eine vereinfachte Darstellung einer weiteren Ausfüh-rungsform einer Verfolgegelenkvorrichtung mit zwei nebeneinanderliegend angeordneten Bremswalzen zur Dämpfung einer Nickbewegung.

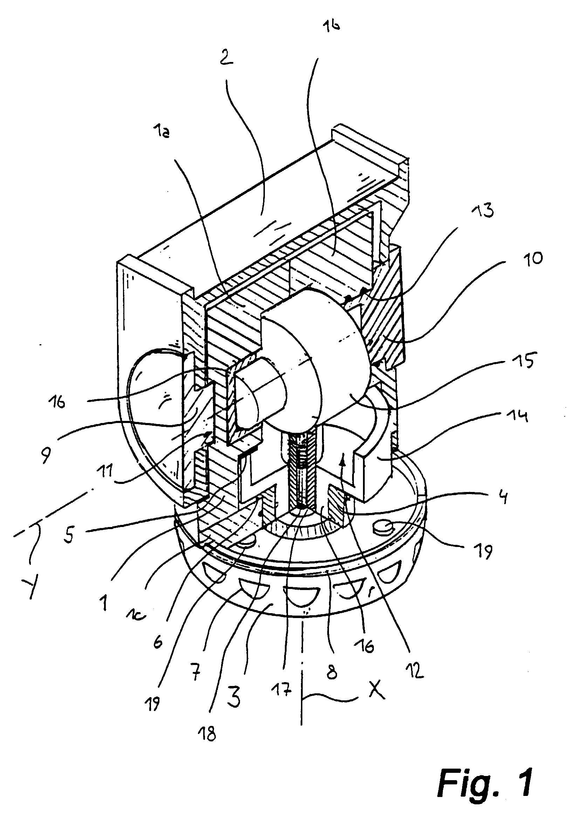

Das Verfolgegelenk gemäß Fig. 1 umfasst ein, hier aus einem korrosionsbeständigen Chrom-Nickelstahl gefertigtes erstes Gelenkteil 1 das aus zwei Hauptschalen 1a und 1b zusammengesetzt ist. Das erste Gelenkteil 1 ist bodenseitig von einem Bodendeckel verschlossen. Das erste Gelenkteil 1 ist ferner über eine, aus einem isolierenden Material gefertigte erste Gelenkeinrichtung in drehbewegbarer Weise an einem Basisteil 3 gelagert.

Die erste Gelenkeinrichtung umfasst bei der hier dargestellten Ausführungsform eine vorzugsweise aus Teflon gefertigte Buchse 4 sowie eine ebenfalls vorzugsweise aus einem Teflon gefertigte Anlaufscheibe 5. An der Buchse 4 ist an einem der Anlaufscheibe 5 zugewandten Endabschnitt ein Ringrand 6 ausgebildet der gemeinsam mit der Anlaufscheibe 5 das erste Gelenkteil 1 bezüglich einer ersten Achse X in axialer Richtung an dem Basisteil 3, lagert.

Das Basisteil 3 ist aus einem isolierenden Kunststoffmaterial gebildet und umfangsseitig mit einer Anzahl Eingriffsmulden 7 versehen, die eine manuelle, werkzeuglose Befestigung des Basisteiles an einer Trägerstruktur beispielsweise einem Stativ ermöglichen. Das Basisteil 3 umfasst bei der hier dargestellten Ausführungsform einen in Richtung der ersten Achse X zu dem ersten Gelenkteil 1 hin aufragenden Umfangsrand der in eine komplementär in dem Bodendeckel 1c gebildete Umfangsausnehmung eingreift.

An dem ersten Glenkteil 1 ist über eine hier durch einen ersten Gelenkzapfen 9 und einen zweiten Glenkzapfen 10 gebildete zweite Gelenkeinrichtung ein zweites Gelenkteil 2 schwenkbewegbar gelagert. Das zweite ( hier nur zur Hälfte dargestellte) Gelenkteil 2 ist als U-förmiger Bügel ausgebildet und übergreift zwei einander gegenüberliegende Seitenflächen des ersten Gelenkteiles 1. der erste Gelenkzapfen steht mit einer in dem ersten Gelenkteil 1 gebildeten zylindrischen Ausnehmung 11 schwenkbewegbar in Eingriff ohne hierbei mit einem im inneren des ersten Glenkteiles 1 gebildeten Fluidraum 12 in Verbindung zu stehen.

Der zweite Gelenkzapfen ist in schwenkbewegbarer Weise an dem ersten Gelenkteil 1 gelagert und durchsetzt die durch die Haupschale 1b gebildete Gehäusewandung des ersten Gelenkteiles 1. Der Durchführungsbereich des zweiten Gelenkzapfens durch die Hauptschale 1b ist mittels einer Dichteinrichtung 13 abgedichtet. Die Dichteinrichtung umfasst hier zwei Dichtringe die aus einem silikonölbeständigen Polymer-Kautschuk gebildet sind und unter geringer Vorspannung an einer Außenumfangswandung des zweiten Gelenkzapfens anliegen.

Im Inneren des ersten Gelenkteiles sind eine erste Walze 14 und eine zweite Walze 15 aufgenommen. Sowohl die erste Walze 14 als auch die zweite Walze 15 sind gegenüber dem ersten Gelenkteil 1 isoliert gelagert. Diese isolierende Lagerung wird bei der ersten Walze durch die genannte Buchse 4 sowie die Anlaufscheibe 5 erreicht. Bezüglich der zweiten Walze 15 wird die isolierende Lagerung durch einen aus einem silikonölbeständigen Kunststoffmaterial gefertigten Topf 16 und den ebenfalls aus einem silikonölbeständigen Kunststoffmaterial gefertigten zweiten Gelenkzapfen 10 erreicht. Der zweite Gelenkzapfen 10 ist bei der hier gezeigten Ausführungsform sowohl mit der zweiten Walze 15 als auch mit dem zweiten Glenkteil 2 drehfest verbunden.

Sowohl die erste Walze 14 als auch die zweite Walze 15 sind in dem ersten Gelenkteil 1 derart aufgenommen, daß zwischen der Außenumfangswandung der ersten Walze 14 und dem ersten Gelenkteil 1 sowie zwischen der Außenumfangswandung der zweiten Walzen 15 ein Umfangsspaltraum gebildet ist. Bei der hier dargestellten Ausführungsform beträgt das entsprechende Spaltmaß 0.74 mm. Auch an den radialen Seitenflächen der zweiten Walze 15 ragt das erste Gelenkteil 1 unter Bildung eines Spaltes von 0.85 bis 0.72 mm an die Walze 15 heran.

Der Fluidraum 12 ist mit einem elektrorheologischen Fluid, hier ein elektrorheologisches Silikonöl gefüllt. Das elektrorheologische Fluid erfüllt dabei den gesamten Umfangsspaltraum zwischen dem ersten Gelenkteil 1 und den beiden Walzen 14 und 15.

Die erste Walze 14 ist auf ihrer dem Basisteil zugewandten Seite mit einem Bund 16 versehen der die Buchse 4 durchsetzt. Über diesen Bund 16 ist die erste Walze 14 mit einer Leitungseinrichtung eines Leistungsschaltkreises verbunden.

Der genannte Bund ist bei der hier dargestellten Ausführungsform mit einer Durchgangsbohrung versehen in welche eine aus einem silikonölbeständigen Kunststoffmaterial gefertigte Führungsbuchse 17 eingepresst ist. In dieser Führungsbuchse 17 ist eine Elektrode 18 aufgenommen die über eine hier nicht dargestellte Federeinrichtung elastisch nachgiebig gegen die Umfangswandung der zweiten Walze 15 die in gleicher Weise wie die erste Walze 14 aus einem leitfähigen Material gebildet ist, gedrängt ist. Über diese Elektrode 18 ist die zweite Walze 15 mit dem Leistungsschaltkreis verbunden.

In dem Basisteil 3 sind mehrere Schleifkontakte 19 vorgesehen die elastisch nachgiebig gegen eine untere radiale Stirnfläche des Bodendeckeis 1c gedrängt sind. Über diese Schleifkontakte 19 ist das erste Gelenkteil mit dem Leistungsschaltkreis verbunden. Bei der hier gezeigten Ausführungsform bildet das erste Gelenkteil eine Masse-Elektrode. An die erste Walze 14 und an die zweite Walze 15 können nach Maßgabe einer Steuereinheit über den Leistungsschaltkreis gegenüber dem ersten Gelenkteil Spannungen im Bereich von 0 bis ca. 10 kV bei etwas größeren Spaltmaßen bis zu 16 kV angelegt werden. In Abhängigkeit von dem Potentialunterschied der Walzen 14 und 15 gegenüber dem ersten Gelenkteil 1 kann der, eine Relativbewegung zwischen dem ersten Gelenkteil 1 und dem zweiten Gelenkteil bzw. dem Basisteil bremsende Fluidreibungswiderstand über die Änderung des Fließverhaltens des in dem entsprechenden Bewegungsspalt aufgenommenen Mediums verändert werden. In Abhängigkeit von der an die Walzen 14 und 15 gegenüber dem ersten Gelenkteil 1 anliegenden Spannung kann damit das dynamische Führungsverhalten des Verfolgegelenkes kontinuierlich eingestellt werden.

Der genannte Leistungsschaltkreis ist mit Vorteil in das Basisteil 3 integriert. Dadurch wird es möglich auf eine besondere Isolation der Hochspannungs-Verbindungsleitungen zwischen dem Leistungsschaltkreis und den Elektroden 18, 19 und dem Bund 16 zu verzichten.

Das erfindungsgemäße Verfolgegelenk wird mit Vorteil erst nach seinem vollständigen Zusammenbau mit dem rheologischen Fluid befüllt. Hierzu wird in vorteilhafter Weise die Elektrode 18 aus der Führungsbuchse 17 herausgezogen und eine Einfüllvorrichtung auf den hierbei freigegebenen Kanal aufgesetzt. Vor Einfüllen des Fluides wird der Fluidraum 12 mit Vorteil evakuiert. Auch das zugeführte Fluid wird mit Vorteil derart vorbehandelt, daß dieses keine Gaseinschlüsse aufweist. Im Inneren des Fluidraums 12 bzw. an dem ersten Gelenkteil 1 ist eine Druckausgleichseinrichtung vorgesehen über welche etwaige insbesondere temperaturbedingte Volumenänderungen des Fluids ausgeglichen werden können. Eine einfache Art des Druckausgleiches kann auf vorteihafte Weise durch ein in einer der Walzen eingeschlossenens Gasvolumen erreicht werden.

Die Walzen 14 und 15 weisen in vorteilhafter Weise eine schwach aufgerauhte, insbes. durch Sandstrahlen behandelte Oberfläche auf, zur Verbesserung des Haftungsvermögens des Fluides an der Walzen-Oberfläche.

Zur Feststellung des Verfolgegelenkes in einer bestimmten Position sind in vorteilhafter Weise zwei Arretiereinrichtungen vorgesehen, die entweder mechanisch oder elektrisch in Eingriffsstellung bringbar sind. Bei einer mechanischen Variante sind hierbei mit Vorteil zwei Klemmschrauben oder einen Ventileinrichtung vorgesehen, die jeweils das erste Gelenkteil 1 gegenüber dem Basisteil 3 bzw. das zweite Gelnkteil 2 gegenüber dem ersten Gelenkteil 1 festlegen. Bei einer elektrischen Variante ist mit Vorteil eine Elektromagneteinrichtung vorgesehen über welche entsprechend zwischen den Gelenkteilen wirksame Bremslamellen in Eingriff bringbar sind.

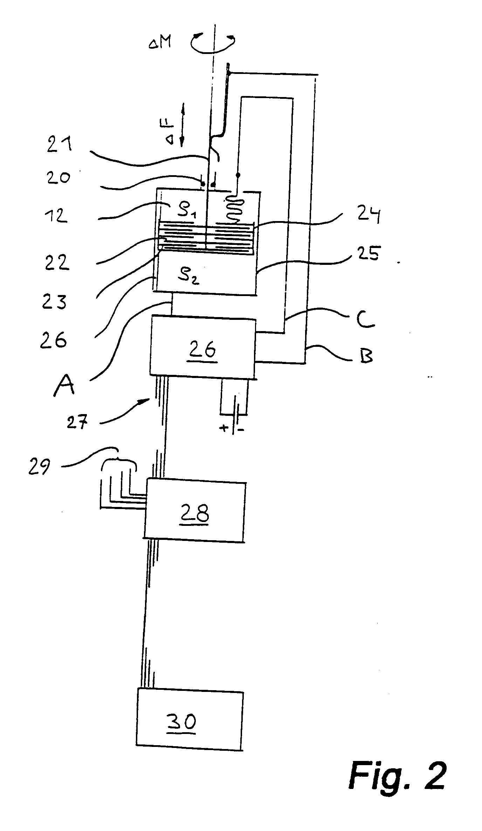

In Fig.2 ist schematisch der Aufbau einer bevorzugten Schaltung zur Steuerung des Verfolgegelenkes dargestelllt. Die hier schematisch dargestellte Verzögerungseinrichtung weicht von der in Verbindung mit Fig. 1 beschriebenen Ausführungsform dahingehend ab, als daß nur eine einzige Bewegungsdichtung 20 vorgesehen ist, über die ein Koppelungsorgan 21 aus dem Fluidraum 12 herausgeführt ist. Das Koppelungsorgan dient der Übertragung eines Schlepp- bzw. Torsionsmomentes das durch eine Anzahl InnenBremslamellen 22 und Außenbremslamellen 23 erzeugt wird. Die Außenbremslamellen sind abwechselnd mit den Innen-Bremslamellen in einem Kolbenelement 24 aufgenommen. Das Kolbenelement 24 ist gleitbewegbar in einem Topfelement 25 aufgenommen. Im Inneren des Topfelementes 25 ist eine Führungseinrichtung 26 vorgesehen die mit dem Kolbenelement 24 in Eingriff steht. Die Führungseinrichtung erlaubt eine Bewegung des Kolbenelementes 24 entlang einer Längsachse ( hier X-Achse) des Topfelementes, verhindert jedoch eine Drehbewegung des Kolbenelementes 24 um die genannte Längsachse. Das Kopplungsorgan 21 ist durch die Bewegungsdichtung 20 hindurch in Richtung der genannten Längsachse (X) verschiebbar. Eine Verlagerungsbewegung des Kolbenelementes 24 in entlang der Längsachse des Topfelementes 25 wird durch eine Fluidverlagerung der Fluid-Teilmengen ρ₁ und ρ₂ verzögert.

Diese translatorische Bewegung kann beispielsweise über einen Zahnstangenmechanismus zur Erzeugung eines um die zweite Achse wirksamen Bremsmomentes herangezogen werden.

Das in dem Fluidraum 12 aufgenommene Fluid ist ein elektrorheologisches Fluid. Sowohl das durch das Koppelungsorgan 20 übertragbare Torsionsmoment M als auch die durch das Koppelungsorgan 20 übertragbare Verschiebekraft F ist über die, an den Elektroden A, B und C angelegte Spannung stufenlos veränderbar.

Die Elektrode A entspricht hier dem in Figur 1 dargestellten Schleifkontakt 19 und bildet hier eine Masse-Elektrode die mit dem Topfelement 25 das aus einem leitfähigen Material gefertigt ist verbunden ist. Die Elektrode B entspricht dem Bund 16 in Fig.1. Die Elektrode C entspricht der in Fig. 1 durch das Bezugszeichen 18 gekennzeichneten Elektrode. Durch die Einstellung bestimmter Spannungs-Potentialunterschiede zwischen dem Topfelement 25, dem Kolbenelement 24 und den Innen-Bremslamellen 22 können das Torsionsmoment M und die Verschiebekraft F stufenlos eingestellt werden.

Das Torsionsmoment wird hierbei durch die veränderbare Fluidreibungskraft zwischen den Innen- und Außen-Bremslamellen eingestellt (Potentialunterschied zwischen den Elektroden B und C). Die Verschiebekraft F wird über den Potential-Unterschied zwischen den Elektroden A und B eingestellt. Die Elektrode B bildet hierbei im Unterschied zu einem für die Verfolgegelenkeinrichtung nach Fig. 1 vorgesehenen Leistungsschaltkreis die Mittelpunktselektrode.

Die Elektroden A, B und C verbinden die Verzögerungseinrichtung mit dem in Fig. 2 durch das Bezugszeichen 26 versehenen Leistungsschaltkreis 26. Dieser Leistungsschaltkreis 26 umfasst einen durch eine Spule/Kondensatorschaltung gebildeten Schwingkreis zur Erzeugung der an die Elektroden A, B und C anzulegenden Hochspannungen vorzugsweise in Form einer pulsierenden Gleichspannung oder ggf. auch Wechselspannung (vorzugsweise f im Bereich von 5 bis 40 Hz). Aufgrund des hohen Widerstandes des in dem Fluidraum aufgenommenen elektrorheologischen Fluides ist der über die Elektroden A, B und C fließende Strom nur gering. Als Energiequelle für ca. 15 Betriebsstunden haben sich zwei in Serie geschaltete 9V-Blockbatterien als ausreichend erwiesen.

Die Spannungsquelle und der Leistungsschaltkreis sind mit Vorteil in das in Fig. 1 dargestellte Basisteil integriert. Der Leistungsschaltkreis 26 ist über eine Anzahl Verbindungsleitungen 27 mit einer Steuereinheit 28 verbunden. Die Steuereinheit 28 wird in vorteilhafter Weise durch die für den Leistungsschaltkreis vorgesehene Spannungsquelle mit Spannung versorgt.

Die hier dargestellte Steuereinheit 28 ist mit einer Anzahl Signalleitungen 29 versehen über welche die Temperatur des in dem Fluidraum aufgenommenen Fluides, die Momentanposition der Verfolgegelenkeinrichtung, das momentane Bremsmoment um jede Achse, der momentan-Strom in der Verzögerungseinrichtung und ggf. die momentan eingestellte Brennweite eines Objektives erfasst werden.

Die Steuereinheit 28 ist ferner mit einer Vorgabeeinrichtung 30 gekoppelt über welche eine bestimmte Gelenk-Schleppcharakteristik vorgegeben werden kann. Auf Grundlage der durch die Vorgabeeinrichtung 30 die beispielsweise aus lediglich einem oder zwei Potentiometern bestehen kann, und den an den Signalleitungen 29 anliegenden Signalen ermittelt die Steuereinheit 28 die erforderlichen Spannungspotentiale für die Elektroden A, B und C. Die Spannungspotentiale werden durch die Steuereinheit 28 ggf. unabhängig von der Vorgabeeinrichtung in einem geschlossenen Regelkreis laufend verändert.

Die Steuereinheit 28 umfasst in vorteilhafter Weise eine programmierte Rechnereinrichtung die auf eine beispielsweise durch ein Eprom gebildete Speichereinrichtung Zugriff hat in welcher Kennfelddaten für unterschiedlichste Bremscharakteristiken abgelegt sind.

Die Vorgabeeinrichtung ist in vorteilhafter Weise in einen Führungsgriff zur Bewegung des Verfolgegelenkes integriert und ist während der Durchführung einer Nachführbewegung betätigbar, so daß über den Führungsgriff die Bremscharakteristik veränderbar ist. Der Führungsgriff ist mit der Verfolgegelenkvorrichtung in vorteilhafter Weise federelastisch gekoppelt, so daß durch entsprechende Verspannung des Führungsgriffes gegenüber dem zweiten Gelenkteil (Fig.1) ein Antriebsmoment das Beschleunigungs oder auch ein Verzögerungsmoment vorgegeben werden kann. Durch entsprechende Verspannung des Führungsgriffes kann beispielsweise eine Sollposition der Gelenkvorrichtung vorgegeben werden die über entsprechend dosierte Änderung der Schleppmomente um die Achse X und die Achse Y überschwingungsfrei anfahrbar ist.

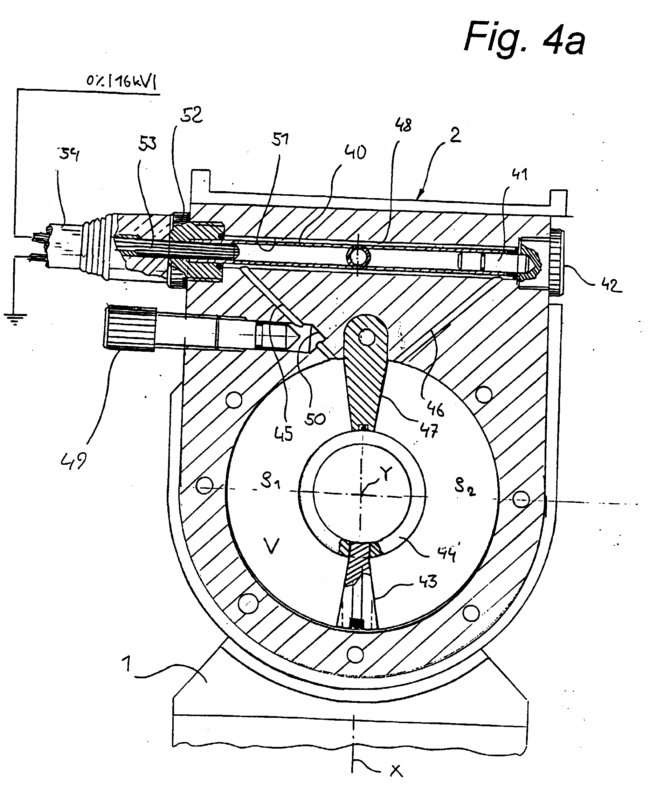

Die in Fig. 4a gezeigte Ausführungsform umfaßt in gleicher Weise wie das in Fig. 1 dargestellte Verfolgegelenk erste und zweite Gelenkteile 1, 2 die gemeinsam um eine vertikale Achse X schwenk- bzw. drehbewegbar an einem Basisteil (nicht dargestellt) angebracht sind.

Im Inneren des zweiten Gelenkteiles 2 ist ein Fluidraum V gebildet der durch eine Kolbeneinrichtung 43 in erste und zweite Fluidraumabschnitte r1, r2 unterteilt ist.

Die Kolbeneinrichtung 43 ist mit einem Achszapfenelement 44 gekoppelt welches wiederum starr an dem ersten Gelenkteil 1 befestigt ist.

Bei einem Schwenken des zweiten Gelenkteiles 2 relativ zu dem Achszapfenelement 44 verändern sich die zwischen der Kolbeneinrichtung 43 und einen an dem zweiten Gelenkteil 2 befestigten Wandungselement 47 eingeschlossenen Voluminas r1, r2. Die hierbei erforderliche Fluidverlagerung erfolgt über Fluidverbindungswegabschnitte 45, 46 48. in dem ersten Fluidverbindungswegabschnitt 45 ist eine manuell einstellbare Drosselventilanordnung 49 vorgesehen über welche der Strömungswiderstand in dem Fluidverbindungswegabschnitt 45 einstellbar ist. Wird eine bei der hier gezeigten Ausführungsform als Stellschraube ausgebildete Ventilspindel derart weit in das erste Gelenkteil 2 eingeschraubt, das eine vordere Stirnfläche derselben auf einer Ventilsitzfläche 50 aufsitzt, so ist der Fluidverbindungsweg gesperrt und das zweite Gelenkteil 2 relativ zu dem ersten Gelenkteil 1 fixiert.

In dem zweiten (hier mittleren) Fluidverbindungswegabschnitt 48 ist eine Flächen-Elektrode 40 vorgesehen die elektrisch isoliert in das zweite Gelenkteil 2 eingesetzt ist. Die Flächenelektrode 40 ist hierbei aus einem Metallrohr gebildet das koaxial in eine geringfügig größer bemessene Bohrung 51 eingesetzt ist. Die Innenwandung der Bohrung 51 bildet abschnittsweise ebenfalls eine Flächen-Elektrode. Die innere Flächen-Elektrode 40 ist durch einen Zentrierzapfen 41 und zwei Verschlußschrauben 42 bzw. 52 in der Bohrung 51 fixiert. Eine der beiden Verschlußschrauben (hier 52) ist mit einer Durchgangsbohrung versehen durch welche ein Steckverbinder 53 in die Flächenelektrode einsteckbar 40 ist.

Der Steckverbinder 53 ist an einem Spannungsversorgungskabel 54 angeschlossen. In dem Spannungsversorgungskabel 54 ist ein weiterer Leitungsdraht vorgesehen welcher über eine hier nicht gezeigte Anschlußklemme mit dem zweiten Gelenkteil zur Erdung desselben verbindbar ist.

In dem Fluidraum V ist eine elektrorheologisches Fluid ( hier ein Silikonöl mit Polyurethan-Partikeln) aufgenommen. Die entsprechenden Fluidfraktionen r1, r2 werden beim Schwenken des zweiten Gelenkteiles 2 relativ zu dem ersten Gelenkteil 2 aufgrund der in den Ringraum hineinragenden Einrichtungen 43 und 47 in entsprechende Richtungen durch die Fluidverbindungswegabschnitte 45 48 und 46 gedrängt. Vermittels der an die Flächenelektrode 40 angelegten, gesteuerten Spannung kann die Drosselwirkung des Fluidverbindungsweges beeinflusst werden.

Die entsprechend angelegte Spannung liegt hier im Bereich von 0 bis 16 kV. Ein zur Erzeugung einer vorzugsweise modulierten Spannung vorgesehner Hochspannungsschaltkreis ist in den unteren Bereich des hier nicht dargestellten Basisteiles eingesetzt und über das abschnittsweise dargestellte Kabel mit dem zweiten Gelenkteil 2 und der Flächenelektrode 40 verbunden.

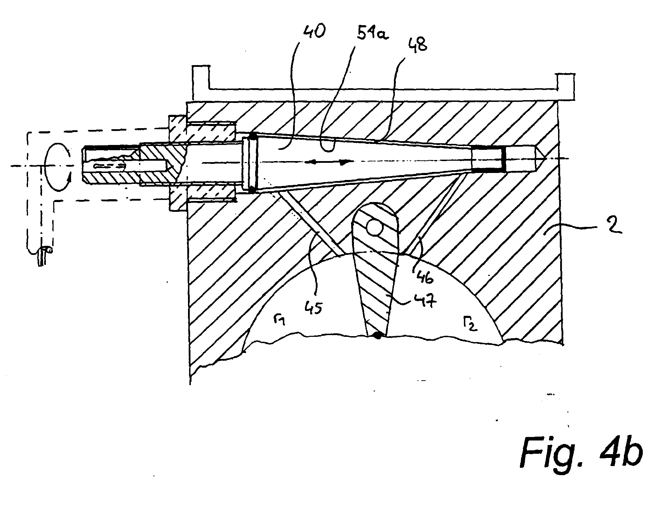

In Fig. 4b ist eine weitere Ausführungsform einer Verzögerungs- bzw. Dämpfungseinrichtung für ein Verfolgegelenk abschnittsweise und stark vereinfacht dargestellt.

Ein zur Verbindung der beiden Fluidraumabschnitte r1 und r2 vorgesehener Fluidverbindungsweg ist wiederum durch drei Fluidwegabschnitte 45, 48 und 46 gebildet. Die hier konisch ausgebildete Flächenelektrode 40 ist in einer ebenfalls konisch ausgebildeten Bohrung 51a aufgenommen. Über eine Feingewindeeinrichtung ist die axiale Position der Flächenelektrode 40 in der Bohrung 51a einstellbar. Dadurch kann sowohl der Elektrodenabstand als auch der zur Verfügung stehende Strömungsquerschnitt verändert werden. Die Flächenelektrode 40 ist vorzugsweise wie in Verbindung mit Fig. 4a beschrieben mit einem Hochspannungsschaltkreis verbindbar.

Insbesondere bei der Verwendung des Verfolgegelenks bei sehr tiefen Umgebungstemperaturen ist es möglich das Bremsmoment ggf. ausschließlich manuell zu steuern.

Insbesondere bei einer Ausführungsform der Verzögerrungseinrichtung mit einem begrenzten Bewegungsbereich ( bei den Ausführungsformen gem. Fig. 4a und 4b beträgt der mögliche Schwenkbereich ca. 320°) ist es möglich eine Getriebeeinrichtung vorzusehen, durch welche der zulässige Schwenkbereich wenigstens eines der Gelenkteile noch vergrößert werden kann oder die Relativgeschwindigkeit in der Verzögerungseinrichtung noch vergrößert werden kann. Dadurch wird es möglich, eine Verzögerungseinrichtung in der in den Fig. 4a oder 4b gezeigten Bauart auch zwischen dem Basisteil und dem ersten Gelenkteil vorzusehen und dabei einen Schwenkbereich zuzulassen bzw. zu ermöglichen, welcher wenigstens 360° abdeckt oder größer ist. Die Getriebeeinrichtung kann auch durch ein Stirnradpaar mit entsprechenden Durchmesserverhältnissen oder vorzugsweise durch ein Planetengetriebe gebildet sein.

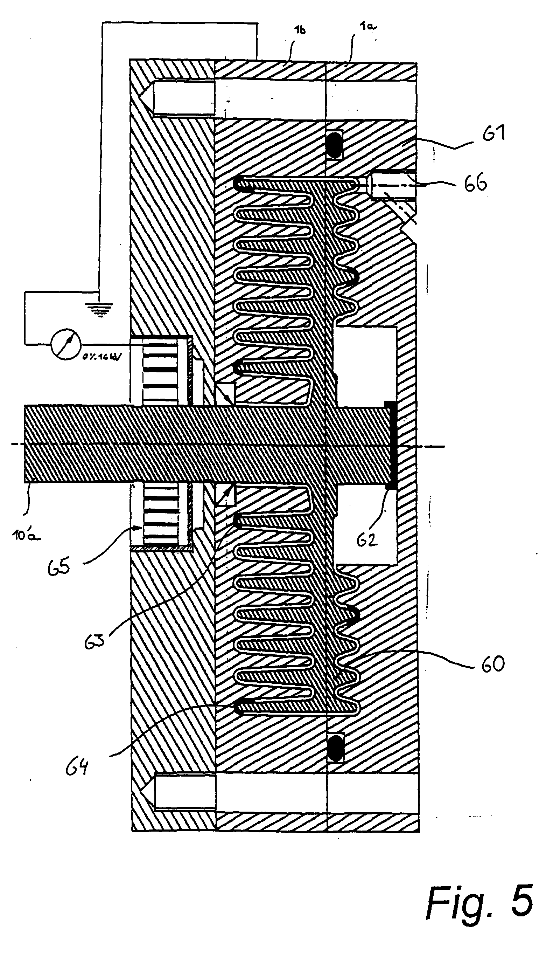

In Fig. 5 ist eine weitere Ausführungsform einer für ein Verfolgegelenk vorgesehenen Ausführungsform einer Verzögerungseinrichtung dargestellt wie sie beispielsweise als im wesentlichen vollständig vormontierte Baugruppe in eine entsprechende Gelenkvorrichtung integriert werden kann.

Die gezeigte Verzögerungseinrichtung umfaßt eine mit einem Achszapfen 10a gekoppelte Walze 60. Die Walze 60 ist beidseitig profilliert und in einem Gehäuseteil 61 aufgenommen das hier aus zwei Gehäusehälften 1a 1b gebildet ist, die vorzugsweise Teil des ersten Gelenkteiles 1 oder des Basisteiles 3 (Fig. 1) bilden.

Zwischen der profillierten Außenfläche der Walze 60 und einer komplementär profilliert ausgebildeten Innenfläche des Gehäuseteiles 61 ist ein Fluidraum begrenzt in welchem eine elektrorheologische Flüssigkeit aufgenommen ist.

Die Kantenbereiche der einzelnen Ringabschnitte der Walze 60 sind abgerundet ausgebildet zu Vermeidung etwaiger Spannungsüberschläge zwischen der Oberfläche der Walze 60 und den zugewandten Bereichen der Innenfläche des Gehäuseteiles 61.

Die Walze 60 ist über eine Isolierscheibenanordnung mit mehreren Isolierscheiben 62, 63, 64 sowohl in radialer als auch in axialer Richtung derart gelagert daß ein vorbestimmtes Spaltmaß exakt eingehalten werden kann.

Die Spannungsversorgung von Walze 60 und Gehäuseteil 61 erfolgt über einen hier nur vereinfacht dargestellten Hochspannungsschaltkreis. Hierzu ist ferner eine Schleifkontakt bzw. Uhrfeder-Kontakteinrichtung 65 vorgesehen.

Das Gehäuseteil 61 ist mit einem elektrorheologischen Fluid gaseinschlußfrei befüllt. Dies kann erreicht werden, indem die Walze 60 und das Gehäuseteil 61 in ein mit der elektrorheologischen Flüssigkeit gefülltes Becken eingetaucht und in eingetauchtem Zustand montiert werden. Es ist auch möglich, das elektrorheologische Fluid über eine Druckleitung zuzuführen und über entsprechend vorgesehene und positionierte Entlüftungskanäle einen Abstrom der Luft zu ermöglichen. Es ist auch möglich, das Fluid anzusaugen.

Um einen insbesondere temperaturschwankungsbedingten Druckausgleich zu ermöglichen ist eine Überdruckventileinrichtung vorgesehen, die hier in eine Gewindebohrung 66 nach Befüllen des Gehäuseteiles 61 einschraubbar ist.

Um eine Entmischung der elektrorheologischen Flüssigkeit zu verhindern wird an die jeweils vorgesehenen Flächenelektroden vorzugsweise eine besonders modulierte Spannung angelegt.

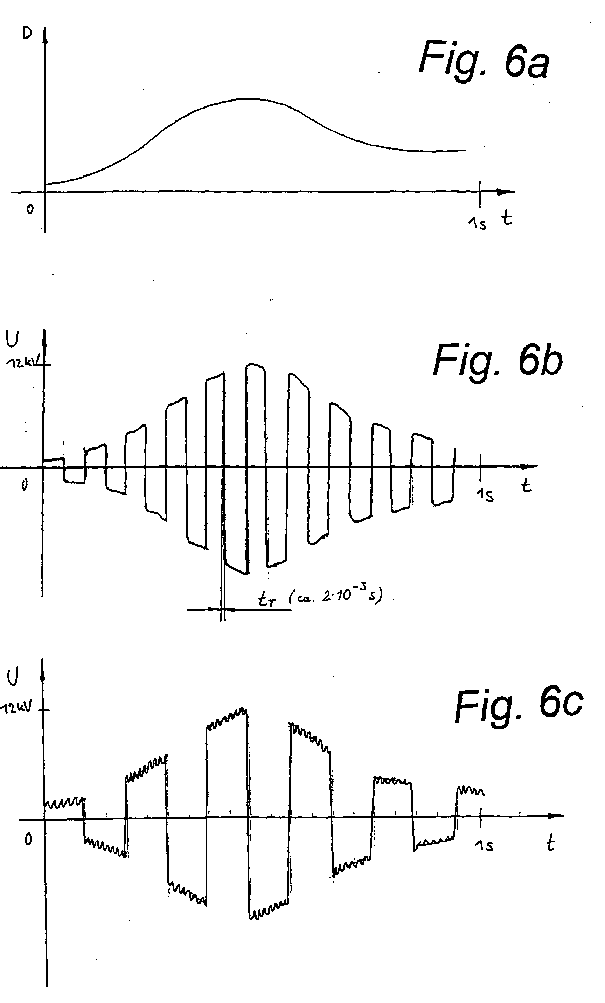

Zwei insbesondere bei einer Silikonölfüllung vorteilhafte Spannungscharakteristiken sind in den Figuren 6b und 6c dargestellt. Die damit erreichte Dämpfungskonstante D ist in Fig. 6a gezeigt.

Gemäß Fig. 6b wird eine bipolare Spannung an die jeweiligen Flächenelektroden angelegt. Die Pol-Wechselfrequenz beträgt hier ca. 10Hz. Die Umschaltdauer t_{T} beträgt ca 0,002s. Die jeweilige Amplitude orientiert sich an der erforderlichen Dämpfungskonstanten D.

Gemäß Fig. 6c ist ebenfalls eine bipolare Spannung vorgesehen. Dieser ist jedoch eine Oberwelle von hier ca 180 Hz überlagert.

Die Polwechselfrequenz kann dadurch, wie hier gezeigt, auf ca. 5Hz abgesenkt werden. Die Umschaltdauer liegt vorzugsweise unter 0,025s.

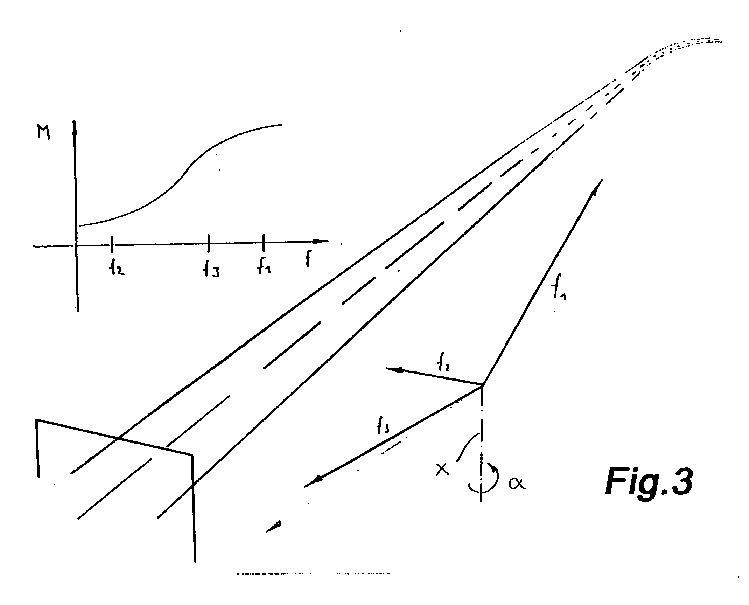

Unter Bezugnahme auf Figur 3 soll die Funktionsweise einer bevorzugten Ausführungsform der Verfolgegelenkvorrichtung nachfolgend beschrieben werden:

Zur Video-Aufzeichnung eines Autorennens ist eine Videokamera auf dem zweiten Gelenkteil 2 der Verfolgegelenkvorrichtung montiert und über einen ebenfalls mit dem zweiten Gelenkteil gekoppelten Führungsgriff bewegbar. Die Kamera ist mit der Steuereinheit 28 über eine Signalleitung 29 verbunden. Über diese Signalleitung erfasst die Steuereinheit 28 u.a. die momentane Einstellung eines Objektives der Kamera.

Die Kamera ist zunächst entsprechend dem Pfeil f1 ausgerichtet und erfasst ein sich aus großer Entfernung näherndes Fahrzeug. Sowohl das Bremsmoment um die erste Achse X als auch um die zweite Achse Y werden auf einen vergleichsweise hohen Wert eingestellt.

Hierzu gibt die Steuereinheit 28 entsprechende Signale an den Leistungsschaltkreis 26. Der Leistungsschaltkreis 26 legt hierbei sowohl an den Bund 16 als auch an die Elektrode 18 eine Spannung von bsw. jeweils 8 kV. Hierbei erhöht sich die Viskosität des in einem Spaltbereich zwischen den Walzen 14 und 15 und dem ersten Gelenkteil 1 aufgenommenen elektrorheologischen Mediums. Dadurch entsteht ein vergleichsweise hohes Bremsmoment sowohl um die Achse X als auch um die Achse Y. Mit ständig kleiner werdendem Abstand des durch die Kamera erfassten Objektes zu der Kamera selbst wird entsprechend der über eine Schärfemesseinrichtung automatisch eingestellten Brennweite auch das Bremsmoment um die erste Achse X kontinuierlich verändert. Das Bremsmoment um die erste Achse wird hierbei im wesentlichen proportional zur momentanen Brennweite allmälich bis auf einen 1/3 des Anfangsbremsmomentes betragenden Wert bei erreichen der Brennweite f2 eingestellt. Hierzu wird unter Berücksichtigung des bei der Momentantemperatur des rheologischen Fluides zu erwartenden Zusammenhangs zwischen Spannungsänderung und Viskositätsänderung der Potentialunterschied zwischen der Walze 14 und dem ersten Gelenkteil auf beispielsweise 2,5 kV abgesenkt.

Der Potentialunterschied zwischen der zweiten Walze 15 und dem ersten Gelenkteil 1 wird nur auf 6 kV abgesenkt, da über die Vorgabeeinrichtung 30 eine schwächere Abhängigkeit des Bremsmomentes von der momentanen Brennweite vorgegeben wurde.

Während die Kamera im Rahmen einer zunächst sehr raschen Schwenkbewegung allmälich in Richtung des Pfeiles f3 geschwenkt wird erhöht sich auch der Potentialunterschied der Walzen 14 und 15 gegenüber dem ersten Gelenkteil 1 so daß hierbei wieder ein höheres Schleppmoment wirksam wird.

Um ein extrem rasches Zuückschwenken der Kamera aus der Richtung f3 zu ermöglichen wird über einen an dem Führungsgriff vorgesehenen Schaltknopf ein Signal erzeugt, das die Steuereinheit 28 veranlasst während der Dauer des Niederdrückens des Knopfes den Potentialunterschied der Walzen 14 und 15 gegenüber dem ersten Gehäuseteil auf einen geringen Wert insbesondere O V abzusenken. Dadurch wird es möglich, die Kamera rasch wieder in die Ausgangsposition gemäß Pfeil f1 zu bringen. Durch Doppelklicken des Betätigungsknopfes wird eine Fixierbremseinrichtung aktiviert die ein Spule aufweist die eine an dem ersten Gelenkteil angebrachte Bremslammelle mit dem zweiten Glenekteil 2 derart in Eingriff bringt, daß eine Bewegung des zweiten Glenkteiles 2 relativ zu dem ersten Glenkteil 1 um die zweite Achse Y unterbunden ist. Durch nochmaliges Betätigen des Schaltknopfes kann der Bremszustand gelöst werden und die Nachführbewegung des Verfolgegelenks erfolgt wieder unter der entsprechend der Steuereinheit 28 eingeregelten Schleppcharakteristik.

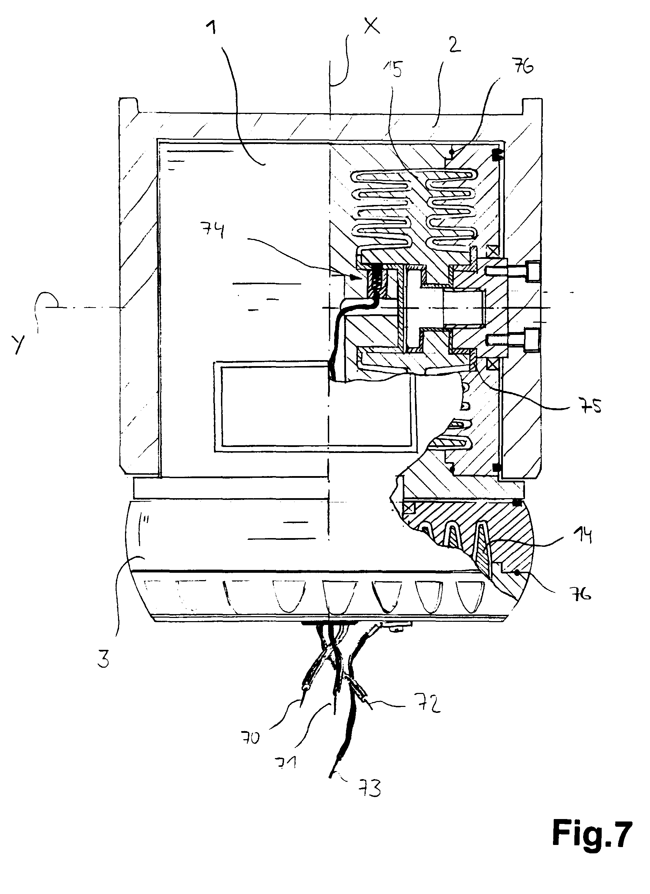

Bei der in Fig.7 gezeigten Ausführungsform der Verfolgegelenkvorrichtung sind jene Bauteile die im Hinblick auf ihre Funktion den Bauteilen der Ausführungsform gem. Fig. 1 entsprechen, mit den gleichen Bezugszeichen versehen. In dem nicht aufgebrochen dargestellten oberen Bereich der Gelenkvorrichtung ist ein weiterer Verzögerungsmechanismus aufgenommen der imwesentlichen identisch zu dem in der rechten oberen Bildhälfte gezeigten Verzögerungsmechanismus aufgebaut ist. Die Dämpfung der Nickbewegung des Gelenkes kann bei der gezeigte Ausführungsform durch zwei ggf. weitgehend entkoppelte Hochspannungsschaltkreise gesteuert werden. So ist es möglich über eine der dem Gelenkteil 2 zugeordnete Dämpfungswalze 15 eine Grundsteuerung vorzunehmen die beispielsweise überwiegend den statischen Lasten Rechnung trägt. Über die zweite, benachbart angeordnete Dämpfungswalze (nicht sichtbar) ist es möglich eine Steuerung höherer Dynamik vorzunehmen um beispielsweise die Einflüsse äußerer Kräfte und Momente bedarfsgerecht zu kompensieren. Die Spannungsversorgung der einzelnen Flächenelektroden erfolgt über Leitungsdrähte 70, 71, 72 und 73. Bei der gezeigten Ausführungsform bilden die Gelenkteile 1 und 3 Masse-Elektroden. Der Leitungsdraht 73 ist mit diesen Gelenkteilen 1 und 3 elektrisch verbunden. Die Leitungsdrähte 70, 71 und 72 sind über Schleifkontakte 74 mit dem jeweils zugeordneten Torsionselement bzw. Dämpfungswalze (hier Walzen 14 und 15) elektrisch verbunden. Die Dämpfungswalzen 14 und 15 sind gegenüber dem jeweils zugeordneten Achszapfen isoliert. Hierzu ist eine Isolierscheiben- bzw.-Buchsenanordnung 75 vorgesehen. Bei der gezeigten Ausführungsform ist die Isolierscheibenanordnung aus einem Teflonmaterial gebildet.Diese Isolierscheiben- bzw.-Buchsenanordnung bildet bei der gezeigten Ausführungsform zugleich eine Lagerungsanordnung zur Drehlagerung sowie zur Lagerung in axialer Richtung der Walzen 14, 15 in dem jeweiligen Gehäuseteil 1, 3.

Die Gehäuseteile 1 und 3 sind aus mehreren Schalenelementen zusammengesetzt. Im Bereich der Fügestellen sind Dichtringe 76 vorgesehen. Die zwischen den Walzen 14, 15 und den jeweiligen Gehäuseteilen 1 und 3 gebildeten Zwischenräume sind gaseinschlussfrei mit einer elektrorheologischen Flüssigkeit befüllt. Sowohl die Walzen 14, 15 als auch die Gehäuseteile 1 und 3 sind zumindest in dem mit der Flüssigkeit in Kontakt stehenden Bereich elektrisch leitfähig ausgebildet. Die Gehäuseteile 1 und 3 sind geerdet. Die jeweiligen Dämpfungseinheiten können auch modular aufgebaut sein und als vollständig vormontierte Baugruppe in die entsprechend vorbereiteten Gehäuseteile eingesetzt sein.

Die erfindungsgemäße Gelenkvorrichtung eignet sich nicht nur als Gerätehalterung sondern auch in vorteilhafter Weise als Joystick-Gelenk zur Lagerung eines Joysticks oder Steuerknüppels wie er beispielsweise bei Dateneingabegeräten Ziel- und Objektverfolgesystemen Anwendung findet.

Die Erfindung ist nicht auf die vorangehend beschriebenen Ausführungsformen beschränkt. Beispielsweise ist es auch möglich anstelle der in Figur 1 dargestellten Walzen auch Bremslamellenpackungen zu verwenden wie sie in Verbindung mit dem in Figur 2 vereinfacht dargestellten Kolbenelement vorgesehen sind. Es ist auch möglich für jede Verzögerungseinrichtung einen separaten Fluidraum und ggf. separate Temperaturerfassungseinrichtungen vorzusehen. Anstelle eines elektrorheologischen Fluides können auch andere Fluide verwendet werden, deren Fließverhalten in einstellbarer Weise veränderbar ist. Anstelle eines auf Silikonölbasis hergestellten Fluides können auch rheologische Mineral-Seifen oder magnet-rheologische Fluide Anwendung finden. Insbesondere bei, für den Kurzzeiteinsatz vorgesehenen Verfolgegelenkeinrichtungen ist es möglich auf eine Rechnereinrichtung bzw auf die Steuereinheit zu verzichten und das gewünschte Schleppmoment über eine unmittelbar in den Leistungsschaltkreis integrierte Vorgabeeinrichtung einzustellen.

## Patentansprüche

1. Verfolgegelenkvorrichtung mit:
- einer ersten Gelenkeinrichtung zur Lagerung eines ersten Gelenkteiles in wenigstens schwenkbewegbarer Weise relativ zu einem Basisteil,
- einer zweiten Gelenkeinrichtung zur Lagerung eines zweiten Gelenkteiles in wenigstens schwenkbewegbarer Weise relativ zu dem ersten Gelenkteil, und
- einer Verzögerungseinrichtung zum Verzögern einer Relativbewegung zwischen dem ersten Gelenkteil und dem Basisteil um eine erste Achse und/oder zum Verzögern einer Relativbewegung zwischen dem zweiten Gelenkteil und dem ersten Gelenkteil um eine zweite Achse,
- wobei die Verzögerungseinrichtung einen Fluidraum mit einem zwischen zwei zueinander relativ bewegbaren Scherflächen begrenzten Scherspaltraumabschnitt aufweist, und eine erste Flächen-Elektrode und eine von der ersten Flächen-Elektrode beabstandete zweite Flächen-Elektrode vorgesehen sind und der Scherspaltraumabschnitt sich zwischen der ersten Flächen-Elektrode und der zweiten Flächenelektrode erstreckt und sowohl die erste Flächen-Elektrode als auch die zweite Flächen-Elektrode mit einem Hochspannungsschaltkreis verbunden sind und eine Steuereinheit vorgesehen ist zur Steuerung der über den Hochspannungsschaltkreis an die beiden Elektroden angelegten Spannung,
- wobei in dem Scherspaltraumabschnitt ein elektrorheologisches Fluid aufgenommen ist, zur Änderung des Scherverhaltens des in dem Scherspaltraum aufgenommenen Fluides nach Maßgabe der an die beiden Flächen-Elektroden angelegten Spannung zur Einstellung einer zwischen den beiden Scherflächen über den Scherspaltraum übertragbaren Fluid-Scherkraft, zur Änderung eines um die erste Achse und/oder um die zweite Achse wirksamen Bremsmomentes in einstellbarer Weise.

2. Verfolgegelenkvorrichtung mit:
- einer ersten Gelenkeinrichtung zur Lagerung eines ersten Gelenkteiles in wenigstens schwenkbewegbarer Weise relativ zu einem Basisteil,
- einer zweiten Gelenkeinrichtung zur Lagerung eines zweiten Gelenkteiles in wenigstens schwenkbewegbarer Weise relativ zu dem ersten Gelenkteil, und
- einer Verzögerungseinrichtung zum Verzögern einer Relativbewegung zwischen dem ersten Gelenkteil und dem Basisteil um eine erste Achse und/oder zum Verzögern einer Relativbewegung zwischen dem zweiten Gelenkteil und dem ersten Gelenkteil um eine zweite Achse,
- wobei die Verzögerungseinrichtung einen Fluidraum aufweist der in einen ersten Fluidraumabschnitt und in einen zweiten Fluidraumabschnitt mittels einer Kolbeneinrichtung unterteilt ist und einem Fluidverbindungsweg zur Verbindung des ersten Fluidraumabschnittes mit dem zweiten Fluidraumabschnitt, wobei der Fluidverbindungsweg eine Drosseleinrichtung aufweist, zur Drosselung einer Fluidströmung im Falle einer Fluidverlagerung zwischen den beiden Fluidraumabschnitten, und eine erste Flächen-Elektrode und eine von der ersten Flächen-Elektrode beabstandete zweite Flächen-Elektrode vorgesehen sind und der Fluidverbindungsweg sich zwischen der ersten Flächen-Elektrode und der zweiten Flächenelektrode erstreckt und sowohl die erste Flächen-Elektrode als auch die zweite Flächen-Elektrode mit einem Hochspannungsschaltkreis verbunden sind und eine Steuereinheit vorgesehen ist zur Steuerung der über den Hochspannungsschaltkreis an die beiden Flächen-Elektroden angelegten Spannung,
- wobei in dem Fluidraum ein elektro-rheologisches Fluid aufgenommen ist, zur Änderung des Strömungswiderstandes des über den Fluidverbindungsweg stömenden Fluides nach Maßgabe der an die beiden Flächen-Elektroden angelegten Spannung zur Beeinflussung eines sich in den jeweiligen Fluidraumabschnitten aufbauenden Druckes, zur Änderung eines um die erste Achse und/oder um die zweite Achse wirksamen Bremsmomentes in einstellbarer Weise.

3. Vorrichtung nach Anspruch 1 oder 2 dadurch gekennzeichnet, daß das Verzögerungsmoment um die erste und/ oder um die zweite Achse stufenlos einstellbar ist.

4. Vorrichtung nach wenigstens einem der Ansprüche 1 bis 3 dadurch gekennzeichnet, daß die an die Elektroden angelegte Spannung eine pulsierende Spannung oder eine Wechselspannung ist.

5. Vorrichtung nach wenigstens einem der Ansprüche 1 bis 4 dadurch gekennzeichnet, daß eine Positionserfassungseinrichtung vorgesehen ist zur Erfassung einer momentanen Schwenkposition wenigstens des ersten Gelenkteiles relativ zu dem Basisteil oder des zweiten Gelenkteiles relativ zu dem ersten Gelenkteil.

6. Vorrichtung nach Anspruch 1 oder 2 dadurch gekennzeichnet, daß die Eingabeeinrichtung ein Potentiometer umfasst.

7. Vorrichtung nach wenigstens einem der Ansprüche 1 bis 6 dadurch gekennzeichnet, daß die Eingabeeinrichtung im Bereich eines Führungsgriffes angeordnet ist.

8. Vorrichtung nach wenigstens einem der Ansprüche 1 bis 7 dadurch gekennzeichnet, daß die an die Flächenelektroden angelegte Spannung eine bipolare Spannung ist.

9. Vorrichtung nach Anspruch 8 dadurch gekennzeichnet, daß die Potentialwechselfrequenz im Bereich von 1 bis 50Hz vorzugsweise im Bereich von 4 bis 12Hz liegt.

10. Vorrichtung nach einem der Ansprüche 1 bis 9 dadurch gekennzeichnet, daß die Potentialänderung innerhalb einer Potentialänderungs-Übergangszeit t_{T} erfolgt die im Bereich von 0.02 bis 0.25s liegt.

11. Vorrichtung nach wenigstens einem der Ansprüche 1 bis 10 dadurch gekennzeichnet, daß der Fluidraum weitgehend gaseinschlussfrei befüllt ist.

12. Vorrichtung nach wenigstens einem der Ansprüche 1 bis 11 dadurch gekennzeichnet, daß eine Druckausgleichseinrichtung insbesondere ein Überdruckventil mit angeschlossener Ausgleichskammer vorgesehen ist, zur Begrenzung des Druckes in dem System.

13. Vorrichtung nach wenigstens einem der Ansprüche 1 bis 12 dadurch gekennzeichnet, daß der Hochspannungsschaltkreis in unmittelbarer Nähe der Vorrichtung angeordnet ist, insbesondere in eines der Gelenkteile oder in das Basisteil integriert ist.

14. Vorrichtung nach wenigstens einem der Ansprüche 1 bis 13 dadurch gekennzeichnet, daß der Leistungsschaltkreis an das Elektrodenpaar eine Spannung im Bereich von 0 bis 10 kV anlegt.

15. Vorrichtung nach wenigstens einem der Ansprüche 1 bis 14 dadurch gekennzeichnet, daß der Abstand der Elektoden im Bereich von 0.5 bis 3 mm liegt.

16. Vorrichtung nach wenigstens einem der Ansprüche 1 bis 15, dadurch gekennzeichnet, daß das zweite Gelenkteil mit einer Befestigungseinrichtung versehen ist, zur Befestigung einer Kamera.

17. Vorrichtung nach wenigstens einem der Ansprüche 1 bis 16, dadurch gekennzeichnet, daß eine Fixiereinrichtung vorgesehen ist, zur Fixierung wenigstens der Relativposition des zweiten Gelenkteiles relativ zu dem ersten Gelenkteil.

18. Vorrichtung nach wenigstens einem der Ansprüche 1 bis 17, dadurch gekennzeichnet, daß daß der Hochspannungsschaltkreis in das Basisteil oder das erste Gelenkteil, oder das zweite Gelenkteil integriert ist.

19. Verfahren zur Steuerung des dynamischen Führungsverhaltens einer Verfolgegelenkvorrichtung mit den Schritten:
- Erfassen eines Soll-Verzögerungsmomentes um eine erste Achse,
- Erfassen eines Soll-Verzögerungsmomentes um eine zweite Achse quer zur ersten Achse,
- Einstellen der Viskosität eines in einer Verzögerungseinrichtung aufgenommenen, hinsichtlich seines Fließverhaltens veränderbaren Fluides jeweils nach Maßgabe des erfassten Soll-Verzögerungsmomentes derart, daß die Verzögerungseinrichtung ein Schleppmoment um die erste oder die zweite Achse erzeugt, das weitgehend dem jeweiligen Soll-Verzögerungsmoment entspricht.

20. Verfahren nach Anspruch 19 dadurch gekennzeichnet, daß zur Einstellung der Viskosität des Fluides die Temperatur des Fluides erfasst wird.

21. Verfahren nach Anspruch 19 oder 20 dadurch gekennzeichnet, daß das jeweilige Soll-Verzögerungsmoment aus einem Kennfeld ermittelt wird.

22. Verfahren nach wenigstens einem der Ansprüche 19 bis 21, dadurch gekennzeichnet, daß an die Flächen-Elektroden eine Wechselspannung oder eine pulsierende Spannung angelegt wird.

23. Verfahren zur Steuerung des Schleppmomentes insbesondere nach wenigstens einem der Ansprüche 19 bis 22, dadurch gekennzeichnet, daß die Spannung derart variert insbesondere bipolar angelegt wird, daß eine Entmischung des Fluides vermieden wird.
